# EUROPÄISCHE PATENTSCHRIFT

(11) **EP 2 589 455 B1**
(45) Veröffentlichungstag und Bekanntmachung des Hinweises auf die Patenterteilung: **26.08.2015**
(21) Anmeldenummer: 12188856.4
(22) Anmeldetag: 17.10.2012
(51) Int. Cl.: B23K 9/20, B23K 11/00, B21J 15/02, B21J 15/08

(54) **Verfahren zum Fügen von Materiallagen mit Eintreibvorrichtung und Schweissvorrichtung**
Method of joining material layers with penetration and welding devices
Procédé d'assemblage de matériaux en couche avec des outils de pénétration et de soudage

(30) Priorität: 07.11.2011 DE 102011117962
(43) Veröffentlichungstag der Anmeldung: 08.05.2013
(73) Patentinhaber: Magna Steyr Fahrzeugtechnik AG & Co KG, 8041 Graz (AT)
(72) Erfinder: Erlacher, Manuel, 9545 Radenthein (AT); Hofer, Bernhard, 8053 Graz (AT); Rodler, Martin, 8160 Krottendorf (AT)
(74) Vertreter: Zangger, Bernd

(56) Entgegenhaltungen:
- DE-A1-102008 044 451
- DE-A1-102011 009 700
- JP-A- 58 059 034
- US-A- 4 766 283

## Beschreibung

Die vorliegende Erfindung betrifft ein Verfahren zum Fügen von mindestens zwei Materiallagen, wovon zumindest eine Materiallage als metallische Materiallage ausgebildet ist, durch einen Stift gemäß dem Oberbegriff des Anspruchs 1 (siehe, z.B., DE 10 2008 044 451 A).

Derartige Verfahren zur Verbindung von Materiallagen werden beispielsweise in der Automobilindustrie eingesetzt und speziell in der Herstellung von Kraftfahrzeugen und deren Bauteilen in Mischbauweise. Dort besteht zum Beispiel der Bedarf Kunststoffteile oder Anbauteile aus glasfaserverstärktem Kunststoff (GFK) an Karosseriebauteilen aus Stahlblech zu befestigen.

Derartige Verbindungen können, wie bekannt, beispielsweise durch mechanisches Nieten hergestellt werden, wobei der Niet eine erste Materiallage durchdringt und eine zweite Materiallage lediglich verformt. Zur Fügung von metallischen Materiallagen ist weiters das Punktschweißen bekannt, durch welches metallische Lagen in einem örtlich kleinen Gebiet aufgeschmelzt und durch das anschließende Erstarren miteinander verschweißt werden. Weiters ist die Verwendung eines Nagels bekannt, der durch zwei zu verbindende Materiallagen getrieben wird und so, durch Formschluss und über die Kraftwirkung an seinem Kopfende auch durch Kraftschluss, eine dauerhafte Verbindung zwischen den Materiallagen herstellen kann. Dabei ist der Widerstand des Nagels entgegen einem axialen Herausziehen aus den Materiallagen relativ gering.

Die US 4 766 283 A lehrt eine Vorrichtung zum Widerstandsschweißen um Isolationen an Rohren zu befestigen.

Die DE 10 2008 044451 A1 offenbart ein Verfahren zum Verschweißen eines ersten Werkstücks mit einem Fügeelement, wobei während des mechanischen Kontakts des Fügeelements mit dem ersten Werkstück ein elektrischer Stromfluss zwischen Werkstück und Fügeelement erzeugt wird.

Aus der DE 10 2011 009700 A1 ist ein Verfahren zum Herstellen einer Verbindung zwischen zwei Werkstücken mittels eines Niets/Kopfbolzens bekannt, bei dem der Niet/Kopfbolzen soweit durch das erste Werkstück gestanzt wird, bis er in Kontakt mit dem zweiten Werkstück tritt und an den Niet/Kopfbolzen eine Spannung angelegt und dadurch ein Fuß des Niets/Kopfbolzens mit dem zweiten Werkstück verschweißt wird.

Ein Verfahren zum Fügen von zwei Fügeteilen, insbesondere Flachmaterialien, der gattungsgemäßen Art ist aus der DE 10 2004 025 492 A1 bekannt. Bei diesem Verfahren wird ein Fügeelement, insbesondere ein Niet, durch einen der Fügeteile hindurchgetrieben. Der Niet liegt auf dem zweiten Fügeteil an, belastet diesen mechanisch, oder bewirkt nach einer Ausführungsform auch eine Einkerbung des zweiten Fügeteils. Hierauf wird in einem anschließenden Schweißprozess Strom in die Kontaktstellen zwischen Fügeelement und Fügeteil geleitet und diese dadurch verschweißt. Dazu wird vorteilhafterweise eine konventionelle Schweißzange eingesetzt. Weiters wird eine Fügekraft zwischen den Fügeteilen und dem Fügeelement durch zwei Elektroden aufgebracht, zwischen die die Fügeteile gespannt werden. Nachteilig an diesem bekannten Fügeverfahren ist, dass die Verbindung zum zweiten Fügeteil wenig stabil ist und insbesondere nur geringe oder gar keine Scherkräfte aus dem zweiten Fügeteil aufgenommen werden können. Weiters kann durch das eingesetzte Werkzeug lediglich ein geringer Druck auf das Fügeelement ausgeübt werden.

Es ist daher eine Aufgabe der Erfindung, ein Verfahren zum Fügen von mindestens zwei Materiallagen anzugeben, welche in dieser Hinsicht verbessert sind und insbesondere ein einfaches und sicheres Fügen der Materiallagen ermöglichen.

Die Lösung der Aufgabe erfolgt durch ein Verfahren zum Fügen von mindestens zwei Materiallagen, wovon zumindest eine Materiallage als metallische Materiallage ausgebildet ist, durch einen Stift, mittels eines Werkzeugs zum Fügen von mindestens zwei Materiallagen, wovon zumindest eine Materiallage als metallische Materiallage ausgebildet ist, durch einen Stift, umfassend eine Eintreibvorrichtung und eine Schweißvorrichtung, wobei die Eintreibvorrichtung dazu ausgelegt ist, den Stift durch alle zu fügenden Materiallagen zu treiben und die Schweißvorrichtung dazu ausgelegt ist, nach dem Eintreiben des Stiftes zumindest einen ersten Abschnitt des Stiftes mit der zumindest einen metallischen Materiallage zu verschweißen, wobei
- der Stift durch alle zu fügenden Materiallagen getrieben wird und,
- nach dem Eintreiben des Stiftes, zumindest ein erster Abschnitt des Stiftes mit der zumindest einen metallischen Materiallage verschweißt wird, siehe Anspruch 1.

Die Eintreibvorrichtung eines Werkzeuges ist also dazu ausgebildet, einen Stift durch mindestens zwei, insbesondere durch alle Materiallagen zu treiben, die miteinander verbunden werden sollen. Das Durchtreiben durch die Materiallagen wird dabei so verstanden, dass die Spitze des Stiftes die zweite Materiallage zumindest soweit durchdringt, dass die Spitze im Bereich des Austrittes aus der zweiten Materiallage zu liegen kommt. Zumindest die Spitze des Stiftes verdrängt daher das Material der zweiten Materiallage bis zum Bereich des Austrittes aus dieser Materiallage. Dadurch, dass der Stift auch in die zweite Materiallage getrieben wird, können Scherkräfte aus dieser Materiallage aufgenommen werden, sodass eine sichere Verbindung auch bei Einwirken von seitlichen Kräften gewährleistet ist. Der Stift kann dazu die zweite Materiallage durchdringen, so dass die Spitze des Stiftes bereits aus der zweiten Materiallage herausragt. Der Stift kann auch kurz vor dem Austritt aus der zweiten Materiallage enden, so dass dessen Spitze nicht aus der Materiallage heraussteht. Die Eintreibvorrichtung muss dazu zumindest kurzzeitig eine entsprechend hohe Kraft aufbringen, um den Stift durch beide Materiallagen zu treiben. Zusätzlich weist das erfindungsgemäße Werkzeug eine Schweißvorrichtung auf, die nach dem Eintreiben des Stiftes über die Eintreibvorrichtung zumindest einen ersten Abschnitt des Stiftes mit einer metallischen Materiallage zu verschweißen vermag. Das Verschweißen wird in der Regel durch Widerstandsschweißen erreicht, aber auch andere Verfahren, wie etwa Verschweißen durch induktive Erwärmung sind denkbar.

Weiterbildungen der Erfindung sind in den abhängigen Ansprüchen, der Beschreibung sowie den beigefügten Zeichnungen angegeben.

Vorteilhafterweise ist ein Werkzeug in einem erfindungsgemäßen Verfahren so ausgebildet, dass die Schweißvorrichtung den zumindest ersten Abschnitt des Stiftes verschweißt, wobei der zumindest erste Abschnitt des Stiftes an einem in Eintreibrichtung vorderen Ende des Stiftes liegt. Dadurch wird unabhängig von der Art der Verbindung des hinteren Stiftendes jedenfalls der oft angespitzte Vorderteil des Stiftes, der durch die Materiallagen getrieben wird, mit einer metallischen Materiallage verschweißt und dadurch sicher fixiert.

Nach einer bevorzugten Ausführungsform ist das Werkzeug so ausgebildet, dass die Schweißvorrichtung einen Schweißstrom durch den Stift leitet. Der Schweißstrom kann so nichtmetallische Materiallagen überschreiten, indem er entlang des ohnehin eingetriebenen Stiftes geführt wird.

In einer weiteren Ausführungsform ist das Werkzeug so ausgebildet, dass die Schweißvorrichtung beide Enden des Stiftes mit jeweils einer metallischen Materiallage verschweißt. Dadurch werden an beiden Enden des Stiftes verschweißbare Materiallagen mit dem eingetriebenen Stift verschweißt, so dass an beiden Enden des Stiftes ein zuverlässiger Halt erreicht wird.

Besonders vorteilhaft ist es für ein erfindungsgemäßes Verfahren, wenn der Stift pneumatisch durch die zumindest zwei Materiallagen eintreibbar ist. Auf diese Weise wird durch vergleichsweise einfache Mittel die erforderliche Kraft erreicht, um den Stift durch die zumindest zwei Materiallagen zu treiben. Der Eintreibvorrichtungsteil des Werkzeuges kann dabei ähnlich ausgebildet sein, wie ein bekannter Druckluftnagler. Alternativ zur pneumatischen Ausbildung der Eintreibvorrichtung kann diese beispielsweise auch elektromechanisch ausgeführt sein.

Ein erfindungsgemäßes Verfahren kann vorteilhaft so ausgestaltet sein, dass vor dem Eintrieb des Stiftes, die Materiallagen gegeneinander vorgespannt werden. Das Werkzeug dient also der Ausführung der Schritte: Vorspannen der Materiallagen, Eintreiben des Stiftes und Verschweißen des Stiftes an den Materiallagen. Durch die Vorspannung wird die kraftschlüssige Verbindung zwischen den Materiallagen verbessert. Vorteilhaft ist auch, wenn durch die Eintreibvorrichtung ein Stift, der an seinem in Eintreibrichtung hinteren Ende einen Kopf aufweist, so eingetrieben wird, dass der Kopf nach dem Eintreiben an einer in Eintreibrichtung ersten Materiallage anliegt. Das Werkzeug kann also in dieser Ausführungsform einen Stift eintreiben, der als Nagel, mit einem Kopf, ausgebildet ist. Der Kopf verbessert den Halt des Stiftes bzw. des Nagels an einer ersten durchdrungenen Materiallage, so dass dieses Ende des Stiftes auch ohne Verschweißen gut fixiert ist.

Beispielsweise besteht zumindest eine der Materiallagen, die in einem erfindungsgemäßen Verfahren an zumindest eine weitere Materiallage gefügt wird, aus einem Kunststoff oder Faser-Kunststoff-Verbund, wie beispielsweise glasfaserverstärktem Kunststoff (GFK). Besonders vorteilhaft ist das erfindungsgemäße Verfahren beispielsweise bei der Befestigung von GFK Material an Karosseriebauteilen.

In einer Ausführungsform des Verfahrens, wird zumindest eine metallische Materiallage von einem metallischen Hilfselement gebildet. Dies ist insbesondere dann vorteilhaft, wenn eine ansonsten äußere Materiallage nicht schweißbar ist. In diesem Fall kann eine Blechscheibe, oder auch ein Blechstreifen, als Hilfselement eingesetzt werden, um ein Verschweißen des Stiftes mit diesem Hilfselement zu ermöglichen und durch diese Schweißverbindung die weiteren Materiallagen sicher zu fixieren.

Die Erfindung wird im Folgenden beispielhaft unter Bezugnahme auf die Zeichnungen beschrieben.
- Fig. 1: ist eine schematische Darstellung eines Werkzeuges für ein erfindungsgemäßes Verfahren.
- Fig. 2a -2f: ist eine Darstellung, welche ein Werkzeug gemäß Fig. 1 in verschiedenen Verfahrensschritten und einen Ablauf eines erfindungsgemäßen Verfahrens zeigt.
- Fig. 3: ist eine Darstellung, welche erfindungsgemäß miteinander verbundene Materiallagen zeigt.
- Fig. 4: ist eine weitere Darstellung, welche erfindungsgemäß miteinander verbundene Materiallagen zeigt.
- Fig. 5: ist eine weitere Darstellung, welche erfindungsgemäß miteinander verbundene Materiallagen zeigt.

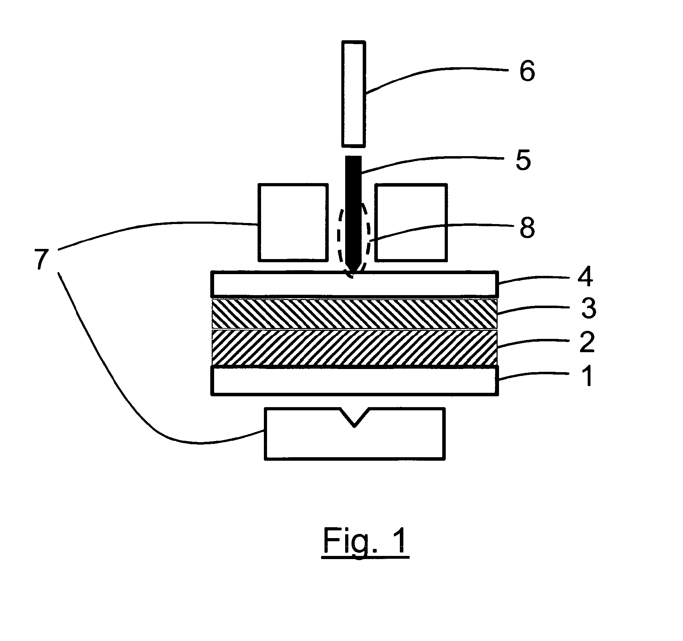

In der Fig. 1 ist ein Werkzeug dargestellt, welches erfindungsgemäß dazu verwendet wird die Materiallagen 1, 2, 3 und 4 aneinander zu fügen. In dieser Figur bestehen die Lagen 1 und 4 aus schweißbarem Material. Die Lage 1 wird durch die metallische Karosserie gebildet, die an der gegenüber liegenden Seite der Materiallagen angeordnete Lage 4 entspricht einem metallischen Anbauteil, beispielsweise einem Blechstreifen. Zwischen diesen verschweißbaren Lagen sind zwei GFK oder Kunststoffteile 2 und 3 angeordnet. Alle Materiallagen 1, 2, 3 und 4 sollen miteinander über den Stift 5 dauerhaft verbunden werden und sind in Fig. 1 noch nicht verbunden. Von einem erfindungsgemäßen Werkzeug sind schematisch die Eintreibvorrichtung 6 und die Schweißvorrichtung 7 dargestellt. Wesentliches Element der dargestellten Eintreibvorrichtung 6 ist der Eintreibkolben 6. Durch eine pneumatische Druckbeaufschlagung des Eintreibkolbens 6 in Richtung auf den Stift 5 hin, wird dieser in der dargestellten Stellung mit großer Kraft durch alle Materiallagen 1, 2, 3 und 4 eingetrieben. Von der Schweißvorrichtung 7 sind als wesentliches Element die Elektroden 7 dargestellt. Nach dem Eintreiben des Stiftes 5 in die materiallagen werden die Elektroden 7 an die äußeren Materiallagen 1 und 4 angelegt und der Schweißstrom über die Elektroden 7 durch den Stift 5 geleitet, so dass es an den Kontaktstellen zwischen dem Stift 5 und den schweißbaren Lagen 1 und 4 zur Ausbildung einer hohen Temperatur und damit zum Aufschmelzen und Verschweißen der Bauteile 1 und 4 mit dem Stift 5 kommt.

Das dargestellte Werkzeug weist also eine Eintreibvorrichtung 6 auf, die beispielsweise ähnlich wie ein bekannter Druckluftnagler funktioniert und eine Schweißvorrichtung 7, die beispielsweise ähnlich wie eine bekannte Schweißzange funktioniert.

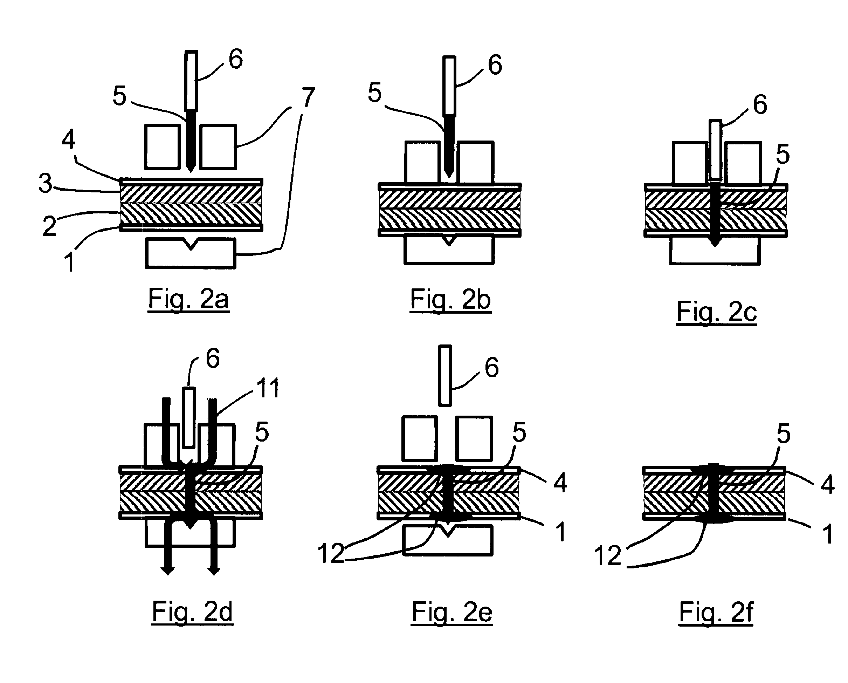

In den Fig. 2a - 2f ist der Ablauf eines erfindungsgemäßen Fügeverfahrens unter Verwendung des beschriebenen Werkzeuges dargestellt. In Fig. 2a befindet sich das Werkzeug, dargestellt über die Schweißvorrichtung 7 und die Eintreibvorrichtung 6, sowie der Stift 5 noch in einer Ausgangsposition, so dass der Stift 5 oberhalb der zu verbindenden Materiallagen 1 bis 4 gehalten wird. Das Werkzeug wird an die Materiallagen angesetzt. Danach werden die Materiallagen durch Schließen des beispielsweise zangenartig ausgebildeten Werkzeuges vorgespannt, wie in Fig 2b ersichtlich. Daraufhin wird der Stift 5 pneumatisch vom Eintreibkolben 6 der Eintreibvorrichtung 6 in die Materiallagen eingetrieben. Der Zustand in dem der Stift 5 bereits durch alle 4 Materiallagen 1, 2, 3 und 4 eingetrieben ist, ist in Fig. 2c dargestellt. Danach wird der Eintreibkolben 6 zurückgezogen und durch die Schweißvorrichtung 7 ein Schweißstrom durch die Elektroden 7 und den Stift 5 geleitet, so dass der Stromfluss 11 entsprechend den in Fig. 2d dargestellten Pfeilen von einer Zangenhälfte über den Stift 5 zur anderen Zangenhälfte geleitet wird. Hierdurch werden die Verschweißungen an den Kontaktstellen zwischen den Materiallagen 1 und 4 und dem Stift 5 erreicht, die in Fig. 2e und 2f durch die Schweißverbindungen 12 dargestellt sind. In Fig. 2e wird das Werkzeug wieder abgehoben und kann daraufhin an die nächste Fügestelle weiter bewegt werden. Fig. 2f stellt die gefügten Materiallagen nach beendeter Bearbeitung dar, in welchen die Schweißverbindungen 12 zwischen dem Stift 5 und den Materiallagen 1 und 4 ausgebildet sind.

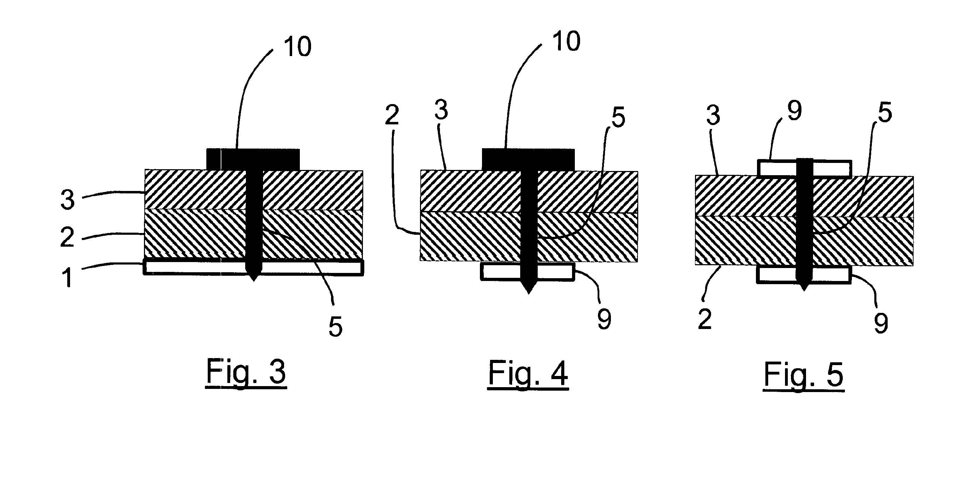

Die Fig. 3 bis Fig. 5 stellen weitere erfindungsgemäße Verwendungsmöglichkeiten des Werkzeuges zum Fügen von Bauteilen dar. In Fig. 3 wird anstelle eines kopflosen Stiftes ein Stift 5 mit Kopf 10, also ein Nagel verwendet. Der Nagel wird, wie in den Fig. 2a - 2f dargestellt und beschrieben, durch das Werkzeug in die Materiallagen 1, 2 und 3 eingetrieben und von der in Fig. 3 nicht dargestellten Schweißvorrichtung verschweißt. Da in diesem Ausführungsbeispiel nur die Lage 1 aus schweißbarem Material besteht, kommt es nur zwischen der Lage 1 und dem Stift 5 zur Ausbildung einer hier nicht dargestellten Schweißverbindung. Die äußere Kunststofflage 3 wird über den Nagelkopf 10 fixiert.

In ähnlicher Weise ist auch in Fig. 4 ein Nagel mit Kopf 10 als Stift 5 zur Herstellung der Verbindung zwischen den Materiallagen 2, 3 und 9 verwendet. In dieser Ausführungsform sind die zu fügenden flachen Bauteile 2 und 3 nicht verschweißbar. Zum Verschweißen wird daher ein metallisches Hilfselement 9 aus schweißbarem Material, beispielsweise eine Blechscheibe, an die Fügestelle angelegt. Die weitere Verbindung geschieht in der oben zu den Fig. 2a - 2f beschriebenen Weise der Anwendung des Werkzeuges. Die Verbindung wird so einerseits durch eine Schweißverbindung zwischen Stift 5 und Hilfselement 9 und auf dem zweiten Ende des Stiftes 5 durch die kraftschlüssige Verbindung zwischen Kopf 10 und einer äußeren Materiallage 3 hergestellt.

In der alternativen Ausführung nach Fig. 5 wird ein Stift 5 ohne Kopf verwendet. Dafür werden zwei metallische Hilfselemente 9 als verschweißbare Materiallagen eingesetzt. Durch die Anwendung des erfindungsgemäßen Werkzeuges kommt es zur Ausbildung von zwei Schweißverbindungen, nämlich jeweils eine Schweißverbindung zwischen dem Stift 5 und jedem der beiden Hilfselemente 9.

Die Erfindung ermöglicht somit in allen Ausführungsformen eine sichere Verbindung zwischen mindestens zwei Materiallagen, durch den Einsatz eines Werkzeuges mit Eintreibvorrichtung und Schweißvorrichtung, wobei ein Stift durch alle Materiallagen eingetrieben wird und anschließend mit mindestens einer metallischen Materiallage verschweißt wird.

### Bezugszeichenliste

- 1: metallische Materiallage
- 2: Materiallage
- 3: Materiallage
- 4: metallische Materiallage
- 5: Stift
- 6: Eintreibvorrichtung
- 7: Schweißvorrichtung
- 8: erster Abschnitt des Stiftes
- 9: metallisches Hilfselement
- 10: Kopf des Stiftes
- 11: Stromfluss
- 12: Schweißverbindung

## Patentansprüche

1. Verfahren zum Fügen von mindestens zwei Materiallagen (1, 2, 3, 4), wovon zumindest eine Materiallage (1, 4) als metallische Materiallage ausgebildet ist, durch einen Stift (5), mittels eines Werkzeugs zum Fügen von mindestens zwei Materiallagen (1, 2, 3, 4), wovon zumindest eine Materiallage (1) als metallische Materiallage ausgebildet ist, durch einen Stift (5), umfassend eine Eintreibvorrichtung (6) und eine Schweißvorrichtung (7), wobei die Eintreibvorrichtung (6) dazu ausgelegt ist, den Stift (5) durch alle zu fügenden Materiallagen (1, 2, 3, 4) zu treiben und die Schweißvorrichtung (7) dazu ausgelegt ist, nach dem Eintreiben des Stiftes (5) zumindest einen ersten Abschnitt des Stiftes (8) mit der zumindest einen metallischen Materiallage (1) zu verschweißen, **dadurch gekennzeichnet, dass**
- der Stift (5) durch alle zu fügenden Materiallagen (1, 2, 3, 4) getrieben wird und,
- nach dem Eintreiben des Stiftes (5), zumindest ein erster Abschnitt des Stiftes (8) mit der zumindest einen metallischen Materiallage (1, 4) verschweißt wird.

2. Verfahren nach Anspruch 1,
**dadurch gekennzeichnet, dass** zumindest eine der Materiallagen (2, 3) von einem Kunststoff oder Faser-Kunststoff-Verbund, wie beispielsweise glasfaserverstärktem Kunststoff gebildet wird.

3. Verfahren nach Anspruch 1,
**dadurch gekennzeichnet, dass** die zumindest eine metallische Materiallage (1, 4) von einem metallischen Hilfselement (9) gebildet wird.

4. Verfahren nach Anspruch 1,
**dadurch gekennzeichnet, dass** die Schweißvorrichtung (7) den zumindest ersten Abschnitt des Stiftes (8) verschweißt, wobei der zumindest erste Abschnitt des Stiftes (8) an einem in Eintreibrichtung vorderen Ende des Stiftes (5) liegt.

5. Verfahren nach Anspruch 1,
**dadurch gekennzeichnet, dass** die Schweißvorrichtung (7) einen Schweißstrom durch den Stift (5) leitet.

6. Verfahren nach Anspruch 1,
**dadurch gekennzeichne**t, dass die Schweißvorrichtung (7) beide Enden des Stiftes (5) mit jeweils einer metallischen Materiallage (1, 4) verschweißt.

7. Verfahren nach Anspruch 1,
**dadurch gekennzeichnet, dass** die Eintreibvorrichtung (6) den Stift (5) pneumatisch durch die zumindest zwei Materiallagen (1, 2, 3, 4) eintreibt.

8. Verfahren nach Anspruch 1,
**dadurch gekennzeichnet, dass** vor dem Eintrieb des Stiftes (5), die zumindest zwei Materiallagen (1, 2, 3, 4) gegeneinander vorgespannt werden.

9. Verfahren nach Anspruch 1,
**dadurch gekennzeichnet, dass** durch die Eintreibvorrichtung (6) ein Stift (5), der an seinem in Eintreibrichtung hinteren Ende einen Kopf (10) aufweist, so eingetrieben wird, dass der Kopf (10) nach dem Eintreiben an einer in Eintreibrichtung ersten Materiallage (4) anliegt.

## Claims

1. Method for joining at least two material layers (1, 2, 3, 4), of which at least one material layer (1, 4) is in the form of a metal material layer, by a pin (5), by means of a tool for joining at least two material layers (1, 2, 3, 4), of which at least one material layer (1) is in the form of a metal material layer, by a pin (5), comprising a driving-in device (6) and a welding device (7), wherein the driving-in device (6) is designed to drive the pin (5) through all material layers (1, 2, 3, 4) to be oined, and the welding device (7) is designed so as, after the driving-in of the pin (5), to weld at least one first section of the pin (8) to the at least one metal material layer (1), **characterized in that**
- the pin (5) is driven through all material layers (1, 2, 3, 4) to be joined, and
- after the driving-in of the pin (5), at least one first section of the pin (8) is welded to the at least one metal material layer (1, 4).

2. Method according to Claim 1,
**characterized in that** at least one of the material layers (2, 3) is formed by a plastic or fibre-plastic composite, such as, for example, glass-fibre-reinforced plastic.

3. Method according to Claim 1,
**characterized in that** the at least one metal material layer (1, 4) is formed by a metal auxiliary element (9).

4. Method according to Claim 1,
**characterized in that** the welding device (7) welds the at least first section of the pin (8), wherein the at least first section of the pin (8) bears against a front end of the pin (5) in the driving-in direction.

5. Method according to Claim 1,
**characterized in that** the welding device (7) conducts a welding current through the pin (5).

6. Method according to Claim 1,
**characterized in that** the welding device (7) welds both ends of the pin (5) to one metal material layer (1, 4) each.

7. Method according to Claim 1,
**characterized in that** the driving-in device (6) drives the pin (5) in pneumatically through the at least two material layers (1, 2, 3, 4).

8. Method according to Claim 1,
**characterized in that** the at least two material layers (1, 2, 3, 4) are prestressed against one another before the pin (5) is driven in.

9. Method according to Claim 1,
**characterized in that** a pin (5) which has a head (10) at the rear end thereof in the driving-in direction is driven in by the driving-in device (6) in such a manner that, after being driven in, the head (10) bears against a first material layer (4) in the driving-in direction.

## Revendications

1. Procédé d'assemblage d'au moins deux couches de matériau (1, 2, 3, 4), dont au moins une couche de matériau (1, 4) est réalisée sous forme de couche de matériau métallique, par le biais d'une broche (5) au moyen d'un outil d'assemblage d'au moins deux couches de matériau (1, 2, 3, 4), dont au moins une couche de matériau (1) est réalisée sous forme de couche de matériau métallique, par le biais d'une broche (5), comprenant un dispositif d'enfoncement (6) et un dispositif de soudage (7), le dispositif d'enfoncement (6) étant conçu de manière à entraîner la broche (5) à travers toutes les couches de matériau à assembler (1, 2, 3, 4) et le dispositif de soudage (7) étant conçu, après l'enfoncement de la broche (5), pour souder au moins une première portion (8) de la broche à l'au moins une couche de matériau métallique (1), **caractérisé en ce que**
- la broche (5) est enfoncée à travers toutes les couches de matériau à assembler (1, 2, 3, 4) et
- après l'enfoncement de la broche (5), au moins une première portion (8) de la broche est soudée à l'au moins une couche de matériau métallique (1, 4).

2. Procédé selon la revendication 1,
**caractérisé en ce qu'**au moins l'une des couches de matériau (2, 3) est formée par un plastique ou un composite fibre-plastique, comme par exemple un plastique renforcé par des fibres de verre.

3. Procédé selon la revendication 1,
**caractérisé en ce que** l'au moins une couche de matériau métallique (1, 4) est formée par un élément auxiliaire métallique (9).

4. Procédé selon la revendication 1,
**caractérisé en ce que** le dispositif de soudage (7) soude l'au moins une première portion (8) de la broche, l'au moins une première portion (8) de la broche étant située au niveau d'une extrémité avant de la broche (5) dans le sens de l'enfoncement.

5. Procédé selon la revendication 1, **caractérisé en ce que** le dispositif de soudage (7) conduit un courant de soudage à travers la broche (5).

6. Procédé selon la revendication 1,
**caractérisé en ce que** le dispositif de soudage (7) soude les deux extrémités de la broche (5) avec une couche de matériau métallique respective (1, 4).

7. Procédé selon la revendication 1,
**caractérisé en ce que** le dispositif d'enfoncement (6) enfonce la broche (5) de manière pneumatique à travers les au moins deux couches de matériau (1, 2, 3, 4).

8. Procédé selon la revendication 1,
**caractérisé en ce qu'**avant l'enfoncement de la broche (5), les au moins deux couches de matériau (1, 2, 3, 4) sont précontraintes les unes contre les autres.

9. Procédé selon la revendication 1,
**caractérisé en ce qu'**une broche (5) qui présente une tête (10) au niveau de son extrémité arrière dans le sens de l'enfoncement est enfoncée au moyen du dispositif d'enfoncement (6), de telle sorte que la tête (10) s'applique après l'enfoncement contre une première couche de matériau (4) dans le sens de l'enfoncement.
